# EUROPEAN PATENT APPLICATION

(11) **EP 2 632 136 A1**
(43) Date of publication of application: **28.08.2013**
(21) Application number: 12305226.8
(22) Date of filing: 27.02.2012
(51) Int. Cl.: H04M 1/725

(54) **A method, a system, a server, a device for configuring a device near a vehicle**

(71) Applicant: Alcatel Lucent, 75007 Paris (FR)
(72) Inventor: Denhez, Alain, 78140 Velizy (FR)
(74) Representative: Kleinbub, Oliver

(57) **Abstract**

The invention concerns a method for configuring a communication device (102) near a vehicle, wherein a message is sent (202) from a server (101), in particular installed in the vehicle, to the communication device (102) via a first data link (103), wherein the communication device (102) is configured (204) upon receipt (203) of the message from the server (101) to a state of a plurality of predetermined communication states depending on the content of the message, wherein the message is determined (201) by the server (101) depending on information about a current vehicle state.

## Description

### Field of the invention

The invention relates to a method, a system, a server, a device for configuring a device near a vehicle.

### Background

Some vehicles have the ability to connect to mobile phones, e.g. via a Bluetooth connection between a server in the vehicle and the mobile phone. Once a user of such device is near the vehicle, a Bluetooth connection between the vehicle server and the mobile phone is activated. This link allows for example to use or manage a mobile phone feature of the vehicle.

Once the user leaves the vehicle and the mobile phone is not near of the vehicle anymore, the Bluetooth link between the vehicle server and the mobile phone is deactivated.

However the use of mobile phones while driving a vehicle may increase the risk of distraction and may result in a higher risk of having an accident.

### Summary

The object of the invention is thus to configure a communication device near a vehicle to limit the connectivity depending on the current vehicle state or warn the user about the risk, to avoid distraction and increase safety while driving a vehicle.

The main idea of the invention is to configure a communication device near a vehicle, wherein a message is sent from a server, in particular installed in the vehicle, to the communication device via a first data link, wherein the communication device is configured upon receipt of the message from the server to a state of a plurality of predetermined communication states depending on the content of the message, wherein the message is determined by the server depending on information about a current vehicle state.

Advantageously the message is sent when the communication device and the server are within a predetermined distance from each other.

Advantageously the current vehicle state is determined by the server depending on information about the vehicle speed.

Advantageously the communication device is configured to a state for not allowing voice calls if a first condition is met, in particular when the vehicle speed exceeds a first predetermined threshold.

Advantageously the communication device is configured to a state for allowing voice calls if a second condition is met, in particular when the vehicle speed is less than a second predetermined threshold.

Advantageously the configuration of the communication device is set to allow data calls in any state.

Advantageously the communication device is configured to a state for displaying a warning message on a graphical user interface of the communication device upon receipt of the message.

Advantageously a prompt for user input to acknowledge the warning is displayed and wherein the state is changed depending on an input detected upon prompting.

Further developments of the invention can be gathered from dependent claims and the following description.

### Brief description of the figures

In the following the invention will be explained further making reference to the attached drawings.
Fig. 1 schematically shows a part of a system for configuring a communication device 102.
Fig. 2 schematically shows a flow chart of some steps of a method for configuring a communication device 102.

### Description of the embodiments

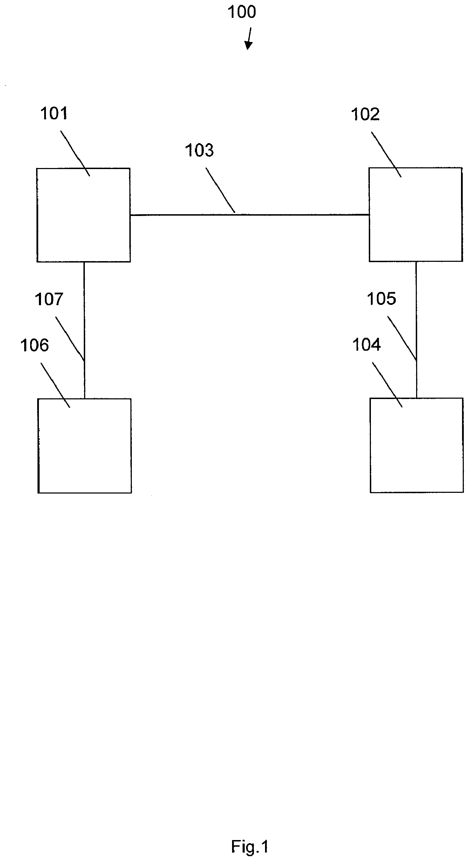

Figure 1 shows a part of a system 100 for configuring a communication device 102 near a vehicle.

The system 100 comprises a server 101 installable in the vehicle for determining a current vehicle state. The server 101 may comprise a power source, e.g. a battery or may be connectable to the vehicle battery.

Furthermore the system 100 comprises a communication device 102 that is adapted to connect to the server 101 via a first data link 103 and to an access point 104 of a communications network via a second data link 105. Alternatively the connection of the communication device 102 to the server 101 may be via the access point 104.

The communication device 102 is for example a mobile phone or a smart phone and comprises a processor a human machine interface, e.g. a microphone, a speaker and a graphical user interface, and a power source, e.g. a battery. Additionally or alternatively to the power source the device may be connectable to the battery of the vehicle. In the latter case, the vehicle according to the example comprises means for providing power to the communication device 102, e.g. a Universal Serial Bus power adapter.

The communication device 102 and the server 101 are connected for example via Bluetooth. Alternatively local area network (LAN), wireless local area network (WLAN, 802.11n) may be used. In that case said connection is for example according to the well known internet protocol (IP), user datagram protocol (UDP), transmission control protocol (TCP) or stream control transmission protocol (SCTP). The communication device 102 and the server 101 comprise the respective sender and receiver for connecting to each other accordingly.

The connection can but must not be directly between the server 101 and the communication device 102.

The communication device 102 and the access point 104 are connected for example according to a mobile communications standard like the Global System for Mobile Communications (well known as GSM), the Universal Mobile Telecommunications System (well known as UMTS) or the Long Term Evolution (well known as LTE). Alternatively a wireless local area network (WLAN, e.g. 802.11n) may be used.

According to the example the server 101 and the communication device 102 are adapted to connect to each other when the communication device 102 and the server 101 are near each other. This means that the connection is established when the server 101 and the communication device 102 are within a certain distance from each other. The maximum distance for connecting may vary depending on propagation conditions, material coverage, production sample variations, sender and receiver configurations and battery conditions of the server 101 and the communication device 102. For example the server 101 and the communication device 102 are adapted to establish the connection whenever a wireless link is possible. To establish a connection the server 101 and the communication device 102 may be set up manually by a user, e.g. using Bluetooth Pairing. Alternatively or additionally the server 101 or the communication device 102 are adapted to send a beacon or pilot signal frequently or to respond to received beacon or pilot signals to trigger the connection or the initiate the pairing, e.g. using Bluetooth Pairing.

Additionally or alternatively other means for detecting the proximity of the communication device 102 and the server 101 may be used. For example said server 101 and said communication device 102 may comprise a Global Positioning System sensor for determining the position of the server 101 and communication device 102 respectively. In this case it may be determined that the server 101 and communication device 102 are near each other when the distance between the individual positions is less than a predetermined threshold, e.g. 2 meters.

In case a wired connection is used or when using Bluetooth the range of the data link is limited by wire length or Bluetooth range and the fact itself that a connection exists between the server 101 and the communication device 102 is indication of proximity. In this case the proximity determination may be based on the fact that a link exists.

The server 101 comprises a processor for executing code and storage for storing the code adapted to determine and send information about the current vehicle state according to a method to be described below.

Furthermore the server 101 is connectable to a means for providing information about the current vehicle state. According to the example the server 101 is connectable a vehicle controller 106 for providing information about the current vehicle state via a third data link 107. The third data link 107 is for example a Controller Area Network Bus connection (well known as CAN) or a FlexRay connection. Alternatively the server 101 may be the same controller as the vehicle controller 106 thus having available in internal memory the required information. Alternatively or additionally the server 101 may be connected to one or more sensors adapted to deliver information about the current vehicle state.

For example the information about the vehicle state is the current vehicle speed. In this case the vehicle speed information is determined by the vehicle controller 106 and transmitted to the sever 101 via the third data link 107, e.g. the Controller Area Network. Additionally or alternatively a wheel speed sensor signal or individual wheel speed sensor information may be received via the third data link 107. In the latter case the server 101 is adapted to determine the vehicle speed from these signals.

The server 101 is adapted to determine and send a message for setting the communication device 102 to a state of a plurality of predetermined communication states to the communication device 102.

The plurality of predetermined communication states is for example stored as parameters on the server 101 or the communication device 102 and comprises according to the example of the states:
- no connections,
- emergency connections only,
- emergency and data connections only,
- all connections.

Abovementioned list is not exhaustive but exemplary. Any other type of communication state supported by the communication device 102 may be used.

The content of the message is either determined to one of the predetermined communication states depending on the information about the current vehicle state by the server 101 or the current vehicle state itself is sent by the server 101 as content of the message to the communication device 102. In the first case the server 101 determines the state from the plurality of predetermined communication states in the latter case the communication device 102 determines the state from the plurality of states.

In any case according to the example the state that the communication device 102 is to be set to is determined for example by mapping the current vehicle state to one of the predetermined communication states. In the example of using the vehicle state, this mapping is e.g. as follows:

If a first condition is met, e.g. the vehicle speed exceeds a first predetermined threshold, e.g. 2 meters per second, select to allow emergency and data connections only.

If a second condition is met, e.g. the vehicle speed is less than a second predetermined threshold, e.g. 1 meter per second, select to allow all connections.

Additionally or alternatively to using the wheel speed, the current vehicle state may be determined from information about the vehicle door locks. In that case the mapping may be digital as follows:

If the vehicle doors are locked, select to allow emergency and data connections only.

If the vehicle doors are unlocked select to allow all connections.

The communication device 102 is adapted to be configured to aforementioned state of the plurality of predetermined communication states depending on the content of the message upon receipt of the message from the server 102.

To this end the communication device 102 may comprise of a connection filter, e.g. a program identifying the type of connection request, i.e. voice connection, data connection, emergency connection, that is configurable to the state selected, i.e. to accept or deny connections accordingly.

Additionally or instead of having the emergency connection allowed state, the communication device 102 may be adapted to be set to allow emergency calls in any state when a predetermined user input is detected by the communication device 102. For example a special key mounted in the communication device 102 or the detection of a user typing a personal identification number via a dial pad of the human machine interface of the device may result in overriding the selected state in order to allow the emergency call in any given state of the communication device 102.

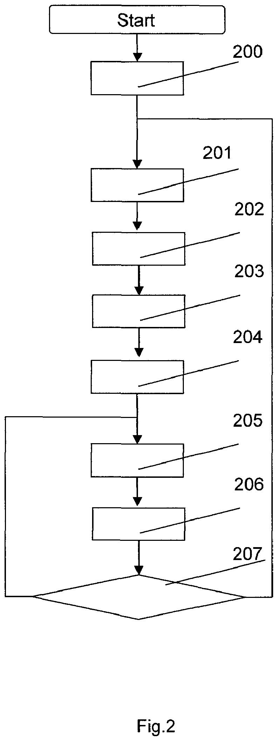

A method for configuring the communication device 102 near the vehicle is explained below making reference to figure 2.

The method starts for example whenever a connection between a communication device 102 and a server 101 is started, e.g. when the communication device 102 is coupled to the server 101 via Bluetooth connection. The method ends for example anytime the connection between the two is disconnected. In case of disconnection the communication device 102 may be adapted to switch to a predefined state, e.g. to accept all connections.

After the start a step 200 is executed.

In step 200, the current vehicle state is determined. For example the current vehicle speed or door lock status is read from the Controller Area Network. Afterwards a step 201 is executed.

In step 201 the content of the message is determined depending on the information about the current vehicle state. For example the current vehicle speed or door lock status is mapped to one state of the plurality of states as described above and the content of the message is set to this state. Afterwards a step 202 is executed.

In step 202 the message is sent from the server 101 to the communication device 102. Address information may be added, e.g. according to the Bluetooth message structure. Afterwards a step 203 is executed.

In step 203, the message is received by the communication device 102. Afterwards a step 204 is executed.

In step 204 the communication device 102 is configured to the state of the plurality of predetermined communication states depending on the content of the message. For example the state is received in the message and the connection filter of the communication device 102 is set to the appropriate setting as described above. Afterwards a step 205 is executed.

In step 205 the current vehicle state is determined, as described in step 201. Afterwards a step 206 is executed.

In step 206 the old content of the message is stored temporarily. The new content of the message is determined depending on the information about the current vehicle state. as described in step 201 above. Afterwards a step 207 is executed.

In step 207 a test is performed to determine if the new content of the message and the temporarily stored content match or not. In case the contents match, the step 205 is executed. Otherwise the step 201 is executed.

Optionally instead of advancing to step 203 directly in the method described above, the sending of the message or the message content may depend on the distance between the communication device 102 and the server 101.

In this optional modification the message may be sent only when the communication device 102 and the server 101 are near, e.g. within a certain distance from each other. The current distance of the two may be determined as described above, e.g. using the Global Positioning Sensor information and determining whether the distance between the individual positions is less than the predetermined threshold. To this end in step 202 an optional test is performed to determine whether the distance is less than the predetermined threshold or not. In this case, when the distance is less than the predetermined threshold, the step 203 is executed or otherwise, the step 200 is executed. This means that a communication device 102 that is able to connect to the server 101 but is not within the certain distance indicated by the predetermined threshold, will not receive a change of state.

Additionally or alternatively to not sending the message, in step 202 the message may be determined for setting the state to allow all connections, in case the distance between the communication device 102 and the server 101 is larger than the predetermined threshold. This means that the mapping according to the current vehicle state may be overruled depending on the distance between the server 101 and the communication device 102.

This is very practical for cases where the communication device 102 shall only have limited connection settings while the communication device 102 and the person using it is in the vehicle, i.e. the distance is less than the predetermined threshold, but not when the communication device 102 and the person using it is outside of the vehicle, i.e. the distance is larger than the predetermined threshold. In this case the threshold distance may be 2 meters.

Alternatively in step 201 the content of the message is the current vehicle state. In this case the mapping described in step 201 is executed in an additional step between step 203 and 204 instead of in step 201. This way the server 101 sends the vehicle state and the communication device 102 determines the correct state from the vehicle state.

Optionally the communication device 102 is adapted to be configured to a state for displaying a warning message on a graphical user interface of the communication device 102 upon receipt of the message. In this case in step 204 the warning message for example for a predetermined time period, e.g. 5 seconds.

Optionally the communication device 102 is adapted to display a prompt for user input to acknowledge the warning. In this case in step 204 the prompt is displayed and the state of the communication device 102 is changed depending on whether an input is detected upon prompting or not. For example the communication state if the communication device 102 is set to not accept any calls at first. When an user input indication that a user has accepted the warning has been detected the communication state is set to the communication state that corresponds to the content of the received message.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for configuring a communication device (102) near a vehicle, **wherein** a message is sent (202) from a server (101), in particular installed in the vehicle, to the communication device (102) via a first data link (103), wherein the communication device (102) is configured (204) upon receipt (203) of the message from the server (101) to a state of a plurality of predetermined communication states depending on the content of the message, wherein the message is determined (201) by the server (101) depending on information about a current vehicle state.

2. The method according to claim 1, wherein the message is sent when the communication device (102) and the server (101) are within a predetermined distance from each other.

3. The method according to claim 1, wherein the current vehicle state is determined by the server (101) depending on information about the vehicle speed.

4. The method according to claim 1 or 2, wherein the communication device (102) is configured to a state for not allowing voice calls if a first condition is met, in particular when the vehicle speed exceeds a first predetermined threshold.

5. The method according to claim 1, 2 or 3, wherein the communication device (102) is configured to a state for allowing voice calls if a second condition is met, in particular when the vehicle speed is less than a second predetermined threshold.

6. The method according to claim 1 to 4, wherein the communication device (102) configuration is set to allow emergency calls in any set state when a predetermined user input is detected by the communication device (102).

7. The method according to claim 1 to 5, wherein the configuration of the communication device (102) is set to allow data calls in any state.

8. The method according to claim 1 to 7, wherein the communication device (102) is configured to a state for displaying a warning message on a graphical user interface of the communication device (102) upon receipt of the message.

9. The method according to claim 8, wherein a prompt for user input to acknowledge the warning is displayed and wherein the state is changed depending on an input detected upon prompting.

10. A system for configuring a communication device (102) near a vehicle, **wherein** a server (101) installable in the vehicle for determining a current vehicle state and the communication device (102) are adapted to connect to each other via a data link (103), wherein the communication device (102) is adapted to be configured (204) upon receipt (203) of a message indicating a current vehicle state from the server (101) to a state of a plurality of predetermined communication states depending on the content of the message, wherein the message is determined (201) by the server (101) depending on information about the current vehicle state.

11. A server (101) for configuring a communication device (102) near a vehicle, **wherein** the server (101) is installable in the vehicle for determining (200) a current vehicle state and adapted to connect to the communication device (102) via a first data link (103), wherein the server (101) is adapted to send (202) a message to the communication device (102) for setting the communication device (102) to a state of a plurality of predetermined communication states depending on the content of the message, wherein the message is determined (201) by the server (101) depending on information about the current vehicle state.

12. A communication device (102) for being configuring when near a vehicle, **wherein** the communication device (102) is adapted to connect to a server (101) installable in the vehicle for determining a current vehicle state via a first data link (103), wherein the communication device (102) is adapted to be configured (204) upon receipt (203) of a message indicating a current vehicle state from the server (101) to a state of a plurality of predetermined communication states depending on the content of the message.

13. A vehicle having installed a server (101) according to claim 8.
